Europäisches Patentamt

European Patent Office

Office européen des brevets

(19)

(11) Veröffentlichungsnummer: **0 023 366**
**B1**

(12) **EUROPÄISCHE PATENTSCHRIFT**

(45) Veröffentlichungstag der Patentschrift:
**15.02.84**

(51) Int. Cl.³: **H 01 F 33/00**

(21) Anmeldenummer: **80200474.7**

(22) Anmeldetag: **21.05.80**

(54) **Transformator zum steuerbaren Verschieben der Phasenwinkel der Ausgangsspannungen gegenüber den Phasenwinkeln der Eingangsspannungen.**

(30) Priorität: **25.07.79 CH 6874/79**

(43) Veröffentlichungstag der Anmeldung:
**04.02.81 Patentblatt 81/5**

(45) Bekanntmachung des Hinweises auf die Patenterteilung:
**15.02.84 Patentblatt 84/7**

(84) Benannte Vertragsstaaten:
**CH DE FR IT LI SE**

(56) Entgegenhaltungen:
**DE - A - 2 008 794**
**FR - A - 1 385 517**
**FR - A - 2 155 839**

(73) Patentinhaber: **BBC Aktiengesellschaft Brown, Boveri & Cie., Haselstrasse, CH-5401 Baden (CH)**

(72) Erfinder: **Glavitsch, Hans, Prof. Dr. Ing.,**
**Hombergstrasse 14, CH-5415 Nussbaumen (CH)**
Erfinder: **Güth, Gerhard, Dipl.-Ing., Obere Halde 29,**
**CH-5400 Baden (CH)**

Transformator zum steuerbaren Verschieben der Phasenwinkel der Ausgangsspannungen gegenüber den Phasenwinkeln der Eingangsspannungen

Die vorliegende Erfindung bezieht sich auf einen Transformator zum steuerbaren Verschieben der Phasenwinkel der Ausgangsspannungen gegenüber den Phasenwinkeln der Eingangsspannungen, insbesondere für ein Wechselstromverbundnetz, enthaltend mindestens eine von der Primärwicklung galvanisch getrennte, dreiphasige Sekundärwicklung, wobei die inneren Enden der den Phasen entsprechenden Sekundärwicklungsteile miteinander verbunden sind und jeder Sekundärwicklungsteil in Stufen unterteilt ist und zwischen den benachbarten Stufen jedes Sekundärwicklungsteils ein Schalter angeordnet ist.

Beim Zusammenschalten mehrerer Energieübertragungsleitungen ist anzustreben, dass die Phasenwinkel der zusammengeschalteten Wechselspannungen übereinstimmen. Dadurch werden die Übertragungseigenschaften der Leitung verbessert und Rückwirkungen auf die Generatoren vermindert. Dieses Bestreben wird erschwert, weil der Phasenwinkel einer in eine Übertragungsleitung eingespeisten Spannung längs dieser Leitung und von der Last am Ende der Leitung, sofern diese kein reiner Wirkwiderstand ist, gedreht wird.

Bei Verbundnetzen werden darum zum Anpassen der Phasenwinkel der Spannungen in den verschiedenen Netzteilen vorzugsweise Quertransformatoren eingesetzt. Der Quertransformator induziert in jedem Leiter der Leitung eine der Eingangsspannung überlagerte Querspannung, deren Phasenwinkel gegenüber dem der Eingangsspannung um 90° versetzt ist, so dass eine Ausgangsspannung entsteht, deren Phasenwinkel gegenüber dem der Eingangsspannung verschoben ist. Gewöhnlich ist die zum Erzeugen der Querspannung vorgesehene Wicklung in mehrere Stufen unterteilt, so dass Querspannungen mit unterschiedlicher Amplitude abgenommen werden können, was ermöglicht, die Ausgangsspannung um unterschiedliche Winkelbereiche zu verschieben. Quertransformatoren ermöglichen nur eine schrittweise Verschiebung des Winkels der Ausgangsspannung in einer Richtung und um relativ kleine Bereiche und benötigen zum Ändern des Abgriffs an der Querspannungswicklung technisch aufwendige und relativ träge mechanische Schalter.

Es ist darum schon ein steuerbarer Phasenschieber vorgeschlagen worden, der anstelle des Quertransformators zum direkten Verbinden zweier Übertragungsleitungen oder zum Erzeugen der Zusatzspannung für einen Quertransformator verwendet werden kann. Dieser Phasenschieber enthält mindestens zwei in Serie geschaltete reaktive Impedanzen, zwischen denen ein Abgriff vorgesehen ist, sowie in Serieschaltung mit mindestens einer dieser Impedanzen einen elektrisch gesteuerten Stromschalter, vorzugsweise einen bidirektionalen Thyristor, und kann direkt zwischen zwei Phasen der Übertragungsleitung oder den Sekundärwicklungen eines Transformators angeschlossen werden. Dieser Phasenschieber ermöglicht eine praktisch kontinuierliche Drehung des Phasenwinkels der abgegriffenen Spannung in jede der beiden möglichen Richtungen. Der Stromschalter des Phasenschiebers kann mit einem elektronischen Steuerkreis geschaltet werden, was eine praktisch unverzögerte optimale Ausrichtung des Phasenwinkels der abgegebenen Spannung ermöglicht. Bei diesem Phasenschieber wird die Drehung des Phasenwinkels durch die Blindleistung in den reaktiven Impedanzen erzeugt, weshalb der Betrag dieser Drehung die erforderliche Nennleistung der Impedanzen bestimmt. Dabei erreicht die Nennleistung für eine Drehung um 60° etwa ein Viertel der Durchgangsleistung. Der beschriebene Phasenschieber ist darum trotz seiner technischen Vorteile aus rein ökonomischen Gründen für Energieübertragungsleitungen nur beschränkt verwendbar.

Die FR-A 1 385 517 bezieht sich auf eine Schaltung der eingangs genannten Art zur Phasenverschiebung der Spannungen in einem Dreiphasennetz. Dazu werden drei (gleichartige) Einphasen-Transformatoren verwendet, deren Primär- und deren Sekundärwicklungen zu Sternschaltungen verbunden sind. Die Sekundärwicklungen sind galvanisch von den Primärwicklungen getrennt und in Wicklungsstufen unterteilt. Es ist ein erster Schalter vorgesehen, dessen drei Kontaktsätze wahlweise die Serieschaltung aller Stufen in jeder Sekundärwicklung oder die teilweise Serieschaltung einiger Stufen in jeder Sekundärwicklung und das Zuschalten dieser Teilserien zu einer Stufe oder einer Teilserieschaltung der Stufen in einer anderen Sekundärwicklung ermöglichen. Ein zweiter Schalter ist für die wahlweise Verbindung des inneren und des äusseren Endes jeder Sekundärwicklung mit einem der drei Ausgangsklemmenpaare vorgesehen, und ein dritter Schalter ermöglicht die Umkehrung der Anschlüsse an den Ausgangsklemmenpaaren.

Der bekannten Transformator bietet jedoch nur die Möglichkeit, den Phasenwinkel der Ausgangsspannung nur nach einer Richtung zu verschieben.

Ausgehend vom geschilderten Stand der Technik liegt der Erfindung die Aufgabe zugrunde, einen Transformator zu schaffen, mit dem der Phasenwinkel der Sekundärspannung in beiden Richtungen über den gesamten Winkelbereich zwischen zwei Sekundärwicklungen verschoben werden kann, wobei die Verschiebung durch vektorielle Addition zweier Spannungen erzeugt wird und in beliebig kleinen Winkelschritten erfolgen kann.

Diese Aufgabe wird bei einem Transformator der eingangs genannten Gattung gelöst, welcher erfindungsgemäss gekennzeichnet ist durch zwei dreiphasige Sekundärwicklungen, deren Spannungen in den einander entsprechenden und im Phasendiagramm benachbarten Wicklungsteilen um 60° verschoben sind, und dadurch, dass zwischen dem inneren Ende jeder Stufe – ausschliesslich dem inneren Ende der innersten Stufe – jedes Wicklungsteils und den inneren Enden der entsprechenden Stufen mindestens eines der im Phasendiagramm benachbarten Wicklungsteils je eine einen Schalter aufweisende Verbindungsleitung vorgesehen ist.

Der neue Transformator ist weit weniger aufwendig als die bekannten Anordnungen und ermöglicht, an der Verbindungsleitung zwischen den Anschlussklemmen der Sekundärwicklung Spannungen abzunehmen, deren Phasenwinkel in beiden Richtungen und um beliebig kleine Bereiche verschiebbar sind. Die Verschiebung erfolgt durch vektorielle Addition der Spannungen in den Stufen der Sekundärwicklung und erfordert somit keine reaktiven Impedanzen, deren Nennleistung entsprechend der maximalen Durchgangsleistung dimensioniert werden müsste. Die Verschiebung erfolgt vorzugsweise durch Ein- und Ausschalten elektronischer Schalter und ist gegenüber der Frequenz der übertragenen Leistung praktisch verzögerungsfrei, was in einem Verbundnetz eine dynamische Anpassung der Phasenwinkel an wechselnde Einspeise- oder Lastzustände ermöglicht. Zwischen den Anschlussklemmen der Sekundärwicklung kann auch ein steuerbarer Phasenschieber angeschlossen werden, dessen reaktive Impedanzen wegen der kleinen Winkelbereiche für relativ kleine Nennleistungen dimensioniert sein können und der eine kontinuierliche Verschiebung des Phasenwinkels der Spannung ermöglicht. Der neue Transformator kann zum direkten Verbinden von Netzteilen mit phasenverschobenen Spannungen verwendet werden, es ist aber auch möglich, die an den Anschlussklemmen der Sekundärwicklungen abnehmbare phasenverschobene Spannung als Zusatzspannung in einem Quertransformator zu verwenden.

Der neue Transformator ermöglicht eine bisher nicht erreichbare Stabilisierung eines Übertragungsnetzes, indem mögliche Schwingungen im Netz ausgeglichen werden können, ohne dass die Synchronisierung des Netzes verändert werden muss. Der neue Transformator ermöglicht auch, durch Anpassen der Phasenwinkel der Spannungen in der Übertragungsleitung an die Phasenwinkel der Generatorspannung mögliche Kurzschlussströme zu begrenzen und damit die Generator- und Turbinenwelle vor einer Überlastung zu schützen.

Nachfolgend wird die Erfindung mit Hilfe der Figuren an einigen Ausführungsbeispielen beschrieben. Es zeigen:

Fig. 1 das Schema einer Ringleitung mit mehreren Leistungserzeugern und -verbrauchern,

Fig. 2 das Schema einer Anordnung des neuen Transformators mit zwei Dreiphasensekundärwicklungen in Verbindung mit einer bevorzugten Form eines Ausgangsschalter-Netzwerkes.

Fig. 3 das Phasendiagramm der Spannungen an den Anschlussklemmen der Sekundärwicklungen des Transformators gemäss Fig. 2,

Fig. 4 das Schema zweier in Stufen unterteilter Sekundärwicklungen des in Fig. 2 gezeigten Transformators mit den Schaltern zum wahlweisen Zusammenschalten einzelner Wicklungsstufen,

Fig. 5a bis 5d die Winkelbereiche, um die der Phasenwinkel der an zwei Sekundärwicklungen gemäss der Fig. 4 abnehmbaren Spannung umgeschaltet werden kann,

Fig. 6 das Schema eines zwischen den Aussenanschlüssen der in Fig. 3 gezeigten Sekundärwicklungen anschliessbaren steuerbaren Phasenschiebers und

Fig. 7 das Prinzipschema eines elektronischen Steuerkreises für die Schalter des neuen Transformators.

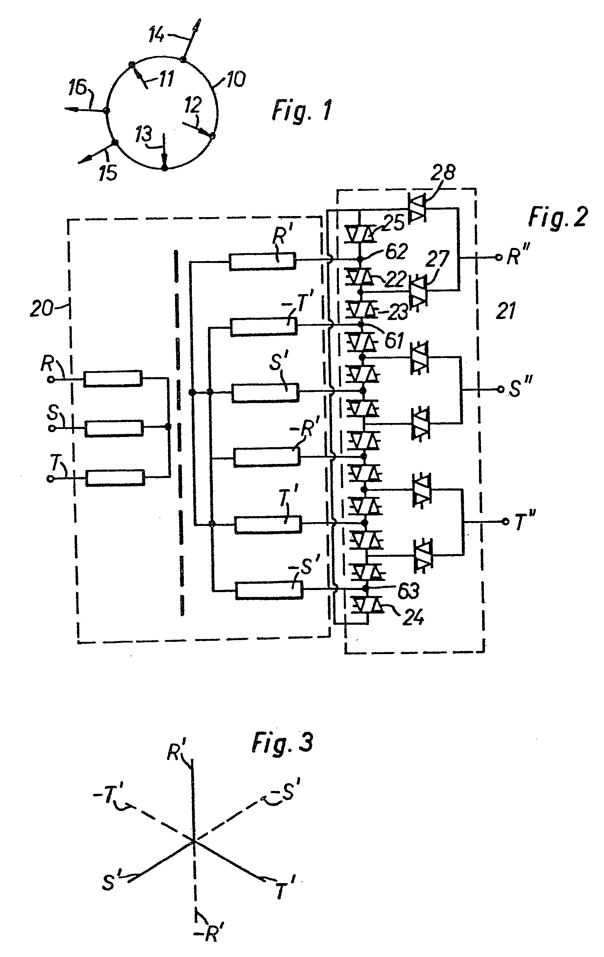

In den Fig. 2, 4 und 6 sind die Steuerleitungen für die gezeigten elektronischen Schalter und der dazugehörige elektronische Steuerkreis der einfacheren Darstellung wegen nicht gezeigt.

In Fig. 1 ist schematisch das Prizipschema einer Ringleitung 10 gezeigt, die mehrere Einspeiseleitungen 11, 12, 13 und Verbraucherleitungen 14, 15 16 enthält. An jeder Anschlussstelle der Einspeise- und der Verbraucherleitungen mit der Ringleitung ist vorzugsweise einer der neuen Transformatoren zwischengeschaltet, damit der Phasenwinkel der Spannungen in jeder Einspeiseleitung mit dem örtlichen Phasenwinkel der Spannungen in der Ringleitung und letzterer mit dem Phasenwinkel der Spannungen in jeder Verbraucherleitung bestmöglich übereinstimmen.

Fig. 2 zeigt das Schema einer bevorzugten Ausführungsform des neuen Transformators. Diese enthält einen Trenntransformator 20 mit einer Dreiphasenprimärwicklung R, S, T und zwei ebenfalls dreiphasigen Sekundärwicklungen R', S', T' bzw. –R', –S', –T'. Die Innenanschlüsse der Sekundärwicklungen sind miteinander verbunden, so dass an den äusseren Anschlussklemmen um 60° gegeneinander verschobene Spannungen erscheinen, wie es in Fig. 3 gezeigt ist. Weiter enthält dieser Transformator ein Ausgangsschalter-Netzwerk 21, das Gruppen von je zwei in Serie geschalteten bidirektionalen Thyristoren 22, 23; 24, 25 usw. aufweist, um die Ausgangsspannungen derjenigen Sekundärwicklungen, an denen um 60° gegeneinander verschobene Spannungen erscheinen, wahlweise mit einer der Ausgangsklemmen R'', S'', T'' zu verbinden. Dazu sind die Verbindungspunkte jedes zusammenwirkenden Thyristorpaars (z.B. 22, 23; 24, 25) über einen weiteren bidirektionalen Thyristor 27, 28 usw. mit einer Ausgangsklemme R'' der Vorrichtung verbunden.

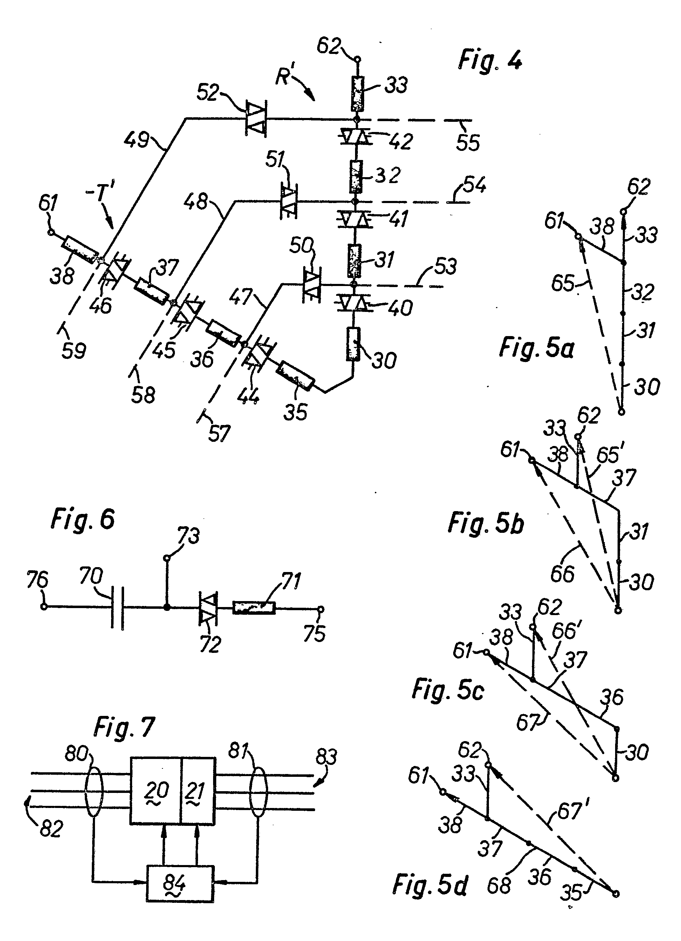

Fig. 4 zeigt die beiden Sekundärwicklungen R', –T' in einer der Fig. 3 entsprechenden Darstellung, wobei die in den Wicklungen induzierten Spannungen den gleichen Winkel wie die Wicklungen miteinander einschliessen. Jede Wicklung ist in vier Stufen 30, 31, 32, 33 bzw. 35, 36, 37, 38 unterteilt. Die Innenanschlüsse jeder Wicklung bzw. der inneren Wicklungsstufen 30, 35 sind galvanisch miteinander verbunden. Zwischen den Stufen jeder Wicklung sind bidirektionale Thyristoren 40, 41, 42 bzw. 44, 45, 46 angeschlossen.

Ausserdem sind die Innenanschlüsse der Wicklungsstufen beider Wicklungen mittels Leitungen 47, 48, 49, in denen weitere bidirektionale Thyristoren 50, 51, 52 angeordnet sind, ebenfalls miteinander verbunden.

Die weiteren Sekundärwicklungen S', –R', T', –S' sind in der gleichen Weise in Wicklungsstufen unterteilt und mit den benachbarten Wicklungen verbunden, was durch die gestrichelt gezeigten Leitungen 53, 54, 55 zur Sekundärwicklung S' bzw. 57, 58, 59 zur Sekundärwicklung –S' angedeutet ist.

In den Fig. 5a bis 5d sind die Phasenwinkel aufgezeigt, die durch das Zusammenschalten bzw. Trennen der in Fig. 4 gezeigten Wicklungsstufen eingestellt werden können. Wenn alle bidirektionalen Thyristoren 40, 41, 42 der Wicklung R' in den leitfähigen Zustand geschaltet werden (Fig. 5a), dann erscheint an der Ausgangsklemme 62 der Wicklung R' die Summe der in den Wicklungsstufen 30, 31, 32, 33 induzierten Spannungen, deren Phasenwinkel mit dem in den Fig. 3 und 4 gezeigten Winkel der Wicklung R' übereinstimmt. Wird zusätzlich der Verbindungsthyristor 52 in den leitfähigen Zustand geschaltet, dann erscheint an der Ausgangsklemme 61 der Wicklung –T' eine Spannung 65, die den vektoriell addierten Teilspannungen in den Stufen 30, 31, 32 und 38 entspricht. Wegen der Winkellage der Stufe 38 in der Wicklung –T' gegenüber den Stufen 30, 31, 32 in der Wicklung R' ist die Spannung 65 gegenüber der Spannung an der Ausgangsklemme 62 um etwa 15° im Gegenuhrzeigersinn verschoben. Werden in der Wicklung R' nur die Thyristoren 40, 41, dazu die Verbindungsthyristoren 51, 52 und in der Wicklung –T' der Thyristor 46 in den leitfähigen Zustand geschaltet, dann erscheinen gemäss Fig. 5b an der Ausgangsklemme 62 eine gegenüber dem Winkel der Wicklung R' im Gegenuhrzeigersinn um etwa 15° und an der Ausgangsklemme 61 der Wicklung –T' eine um etwa 30° verschobene Spannung 65' bzw. 66. Werden, wie es in Fig. 5c gezeigt ist, durch Einschalten der Thyristoren 40 in der Wicklung R', der Verbindungsthyristoren 50, 52 und der Thyristoren 45, 46 in der Wicklung –T' die Wicklungsstufen 30, 36, 37, 38 bzw. 33 hintereinandergeschaltet, dann erscheint an der Ausgangsklemme 62 eine Spannung 66' und an der Ausgangsklemme 61 eine Spannung 67, die gegenüber dem Winkel der Wicklung R' um etwa 30° bzw. 45° im Gegenuhrzeigersinn verschoben sind. Werden schliesslich die Thyristoren 44, 45, 46 und 52 in den leitfähigen Zustand geschaltet und damit alle Stufen der Wicklung –T' in Serie, sowie die Stufe 33 der Wicklung R' zu den Wicklungen 35, 36, 37 geschaltet, dann stimmt der Phasenwinkel der Spannung 68 an der Ausgangsklemme 61 mit der Richtung der Wicklung –T' überein, und die Spannung 67' an der Klemme 62 ist um etwa 15° im Uhrzeigersinn gegenüber der Spannung 68 verschoben.

Es versteht sich, dass die beschriebenen phasenverschobenen Spannungen auch durch andersartiges Zusammenschalten der Wicklungsstufen erreicht werden können. Beispielsweise erscheint an der Ausgangsklemme 62 die Spannung 65' auch dann, wenn der Thyristor 44 in der Wicklung –T', der Verbindungsthyristor 50 und die Thyristoren 41, 42 in den leitfähigen Zustand und damit die Wicklungsstufen 35, 31, 32, 33 in Serie geschaltet sind. Diese Überlegungen sind jedem Fachmann geläufig, weshalb hier weitere Beispiele für das Zusammenschalten von Wicklungsstufen nicht aufgeführt werden.

Es versteht sich weiter, dass durch Abschalten der Verbindungsthyristoren 50, 51, 52 und Einschalten der nicht gezeigten Verbindungsthyristoren in den Leitungen 53, 54, 55 und der Thyristoren zwischen den in Fig. 4 ebenfalls nicht gezeigten Stufen der Wicklung –S' an der Ausgangsklemme der Wicklung R' Spannungen erscheinen, deren Phasenwinkel entweder der Richtung der Wicklung R' entspricht oder aber im Uhrzeigersinn um etwa 15°, 30° oder 45° gegenüber der erstgenannten Spannung verschoben sind.

Auf diese Weise ist es möglich, den Phasenwinkel der Spannung an der Ausgangsklemme 62 der Wicklung R' schrittweise im Uhrzeigersinn und im Gegenuhrzeigersinn zu verschieben, wobei die Anzahl der zwischen «benachbarten» Wicklungen möglichen Verschiebeschritte der Anzahl der Wicklungsstufen in diesen Wicklungen entspricht.

Die Spannungen an den Anschlussklemmen 62, 61 der Wicklungen R' und –T' können mit Hilfe der Thyristoren 22 bzw. 23 und des Thyristors 27 an die Ausgangsklemme R'' geleitet werden. Die gleiche Ausgangsklemme kann mit Hilfe der Thyristoren 24, 25 und 28 auch mit den Anschlussklemmen 62, 63 der Wicklungen R' bzw. –S' verbunden werden. Das ermöglicht, an der Ausgangsklemme R'' eine Spannung abzunehmen, deren Winkel schrittweise und im beschriebenen Beispiel um jeweils etwa 15° zwischen den Winkeln der Wicklungen –S' bis –T' verschoben werden kann.

Es versteht sich, dass die gleichen Überlegungen für die Spannungen an den Anschlussklemmen der Wicklungen S', –T', –R' und T', –R', –S' bzw. an den Ausgangsklemmen S'' und T'' gelten.

Die Anschlussklemmen der Sekundärwicklungen können auch mit einem steuerbaren Phasenschieber verbunden werden, der dann die in Fig. 2 gezeigten Thyristoren 22, 23; 24, 25 usw. ersetzt. In Fig. 6 ist die Prinzipschaltung eines geeigneten Phasenschiebers gezeigt. Dieser enthält zwei in Serie geschaltete reaktive Impedanzen, von denen im gezeigten Beispiel die eine als Kondensator 70, die andere als Induktivität 71 ausgebildet ist. Mindestens einer der Impedanzen ist ein steuerbarer bidirektionaler Thyristor 72 zugeordnet. Zwischen den Impedanzen bzw. den zugeordneten Thyristoren ist der Abgriff 73 des Phasenschiebers vorgesehen. Die Aussenanschlüsse 75, 76 sind beim vorliegenden Beispiel zum Anschluss an die Ausgangsklemmen «benachbarter» Sekundärwicklungen vorgesehen.

Wie eingangs beschrieben wurde, ist bei einem solchen Phasenschieber die Nennleistung der reaktiven Impedanzen vom Winkel der angestrebten Phasenverschiebung abhängig. Weil der neue Transformator ermöglicht, den Winkel zwischen den Phasen in beliebig kleine Bereich zu unterteilen, kann ein Phasenschieber, mit dem die Spannung innerhalb eines solchen Teilbereichs kontinuierlich verschoben wird, mit gebräuchlichen Bauelementen realisiert werden.

Fig. 7 zeigt das Prinzipschema des neuen Transformators mit einem elektronischen Steuerkreis für die Schalter zwischen den Stufen der Sekundärwicklungen und im Ausgangsschalter-Netzwerk. Bei dieser Prinzipschaltung sind zwei Sensorgruppen 80, 81 vorgesehen, die den Phasenwinkel in den Eingangsleitungen 82 bzw. den Ausgangsleitungen 83 messen und als Eingangssignale an den Steuerkreis 84 leiten. Diese Eingangssignale werden in den Schaltungen des Steuerkreises zu Schaltsignalen verarbeitet, die an den Transformator 20 und das Ausgangsschalter-Netzwerk 21 geleitet werden. Einzelheiten dieses Steuerkreises werden hier nicht beschrieben, weil die Auswahl der für einen vorgegebenen Transformator und die angestrebten Betriebsbedingungen bestgeeigneten Schaltungen und die zum Aufbau solcher Schaltungen erforderlichen Bauelemente nicht Teil der vorliegenden Erfindung sind.

Es versteht sich, dass der beschriebene Transformator an besondere Betriebsbedingungen angepasst und entsprechend abgeändert werden kann. Beispielsweise ist es möglich, die Sekundärwicklungen in weniger oder mehr als die gezeigten vier Stufen zu unterteilen und dadurch die Bereiche der schrittweisen Verschiebung des Phasenwinkels der Spannung zu vergrössern oder zu verkleinern. Wenn die Verschiebung nur in einer Richtung, d.h. im Uhrzeigersinn oder im Gegenuhrzeigersinn, erforderlich ist, dann kann die Ausgangsspannung direkt an den Anschlussklemmen der Sekundärwicklungen R', S', T' abgenommen und auf das Ausgangsschalter-Netzwerk 21 verzichtet werden. Wie bereits oben beschrieben wurde, wird vorzugsweise ein elektronischer Steuerkreis verwendet, der die Thyristoren im Transformator und im Ausgangsschalter-Netzwerk in Abhängigkeit von der Phasenlage der Eingangsspannung der Primärwicklung und der Ausgangsspannung der Sekundärwicklung steuert, was ermöglicht, die vom Transformator bewirkte Phasenverschiebung der Ausgangs- gegenüber der Eingangsspannung auch bei allfälligen raschen Änderungen immer optimal gegenseitig anzupassen.

Bezeichnungsliste

| | | |
|---|---|---|
| 10 | = | Ringleitung |
| 11–13 | = | Einspeiseleitungen |
| 14–16 | = | Verbraucherleitungen |
| 20 | = | Trenntransformator |
| 21 | = | Ausgangsschalter-Netzwerk |
| 22–25 | = | Thyristoren |
| 27, 28 | = | Thyristoren |
| 30–33 | = | Wicklungen |
| 35–38 | = | Wicklungen |
| 40–42 | = | Thyristoren |
| 44–46 | = | Thyristoren |
| 47–49 | = | Leitungen |
| 50–52 | = | Verbindungsthyristoren |
| 53–55 | = | Leitungen |
| 57–59 | = | Leitungen |
| 61–63 | = | Anschlussklemmen |
| 65–68 | = | Spannungen |
| 70 | = | Kondensator |
| 71 | = | Induktivität |
| 72 | = | Thyristor |
| 73 | = | Abgriff |
| 75, 76 | = | Aussenanschlüsse |
| 80, 81 | = | Sensorgruppen |
| 82 | = | Eingangsleitungen |
| 83 | = | Ausgangsleitungen |

**Patentansprüche**

1. Transformator zum steuerbaren Verschieben der Phasenwinkel der Ausgangsspannungen gegenüber den Phasenwinkeln der Eingangsspannungen, insbesondere für ein Wechselstromverbundnetz, enthaltend mindestens eine von der Primärwicklung galvanisch getrennte, dreiphasige Sekundärwicklung (R', S', T'; –R', –S', –T'), wobei die inneren Enden der den Phasen entsprechenden Sekundärwicklungsteile miteinander verbunden sind und jeder Sekundärwicklungsteil in Stufen (30–33; 35–38) unterteilt ist und zwischen den benachbarten Stufen jedes Sekundärwicklungsteils ein Schalter (50, 51, 52) angeordnet ist, gekennzeichnet durch zwei dreiphasige Sekundärwicklungen (R', S', T'; –R', –S', –T'), deren Spannungen in den einander entsprechenden und im Phasendiagramm benachbarten Wicklungsteilen (R', –T') um 60° verschoben sind, und dadurch, dass zwischen dem inneren Ende jeder Stufe (31, 32, 33) – ausschliesslich dem inneren Ende der innersten Stufe (30) – jedes Wicklungsteils (R') und den inneren Enden der entsprechenden Stufen (36, 37, 38) mindestens eines der im Phasendiagramm benachbarten Wicklungsteils (–T') je eine einen Schalter (50, 51, 52) aufweisende Verbindungsleitung (47, 48, 49) vorgesehen ist.

2. Transformator nach Anspruch 1, dadurch gekennzeichnet, dass ein Ausgangsschalter-Netzwerk (21) vorgesehen ist, das je Phase zum wahlweisen Abnehmen der Spannung von einer der Anschlussklemmen (62, 61) der im Phasendiagramm (Fig. 3) benachbarten Sekundärwicklungsteile (R', –T') zwei Schalter (22, 23) aufweist, deren einer Anschluss mit einer der genannten Anschlussklemmen verbunden ist und deren andere Anschlüsse miteinander und mit dem Ausgangsanschluss des Ausgangsschalter-Netzwerkes verbunden sind.

3. Transformator nach Anspruch 2, dadurch gekennzeichnet, dass das Ausgangsschalter-Netzwerk (21) zum kontinuierlichen Verschieben des Phasenwinkels der an den Anschlussklemmen (62, 61) der im Phasendiagramm (Fig. 3) benachbarten Sekundärwicklungsteile (R', –T') erscheinenden Spannungen zwischen diesen Anschlussklemmen je einen steuerbaren Phasenschieber (Fig. 6) aufweist.

4. Transformator nach Anspruch 3, dadurch gekennzeichnet, dass der steuerbare Phasenschieber mindestens zwei in Serie geschaltete reaktive Impedanzen (70, 71) aufweist, zwischen denen ein Abgriff (73) angeschlossen ist und in Serieschaltung mit mindestens einer der reaktiven Impedanzen (71) einen elektronisch gesteuerten Stromschalter (72).

**Claims**

1. A transformer for the controlled shifting of the phase angles of output voltages with respect to the phase angles of input voltages, in particular for an interconnected alternating-current system, which transformer contains at least one three-phase secondary winding (R', S', T'; –R', –S', –T') which is decoupled with respect to direct current from the primary winding, the inner ends of the parts of the secondary winding corresponding to the phases being connected to one another and each part of the secondary winding being subdivided into stages (30–33; 35; 38) and between the adjoining stages of each part of the secondary winding a switch (50, 51, 52) being arranged, characterised by two three-phase secondary windings (R', S', T'; –R', –S', –T'), the voltages of which are displaced by 60° in the winding parts (R', –T') which correspond to each other and are adjacent to each other in the phase diagram, and by the fact that between the inner end of each stage (31, 32, 33), excluding the inner end of the innermost stage (30), of each winding part (R') and the inner ends of the corresponding stages (36, 37, 38) of at least one of the winding parts (–T') which are adjacent in the phase diagram, in each case one connecting line (47, 48, 49) is provided which has a switch (50, 51, 52).

2. A transformer according to Claim 1, characterised in that an output switch network (21) is provided which has two switches (22, 23) for each phase for the selective tapping-off of the voltage from one of the connecting terminals (62, 61) of the secondary winding parts (R', –T') which are adjacent in the phase diagram (Figure 3), one connection of these switches being connected to one of the said connecting terminals and the other connections of these switches being connected to each other and to the output connection of the output switch network.

3. A transformer according to Claim 2, characterised in that the output switch network (21) has, for the continuous shifting of the phase angle of the voltages appearing at the connecting terminals (62, 61) of the secondary winding parts (R', –T') which are adjacent to each other in the phase diagram (Figure 3), one controlled phase shifter (Figure 6) between each of these connecting terminals.

4. A transformer according to Claim 3, characterised in that the controlled phase shifter has at least two series-connected reactive impedances (70, 71) between which a tap (73) is connected and, connected in series with at least one of the reactive impedances (71), an electronically controlled current switch (72).

**Revendications**

1. Transformateur permettant un décalage contrôlé des angles de phase des tensions de sortie par rapport aux angles de phase des tensions d'entrée, en particulier pour un réseau interconnecté en courant alternatif, comportant au moins un enroulement secondaire (R', S', T'; –R', –S', –T') triphasé séparé galvaniquement de l'enroulement primaire, les extrémités internes des parties de l'enroulement secondaire correspondant aux phases étant interconnectées et chaque partie d'enroulement secondaire étant subdivisée en étages (30 à 33, 35 à 38), un interrupteur (50, 51, 52) étant chaque fois monté entre les étages voisins de chaque partie d'enroulement secondaire, caractérisé par deux enroulements secondaires (R', S', T'; –R', –S', –T') triphasés dont les tensions dans les parties d'enroulement (R', –T') correspondant l'une à l'autre et voisines dans le diagramme de phase sont décalées de 60° et par le fait qu'entre l'extrémité interne de chaque étage (31, 32, 33), à l'exclusion de l'extrémité interne de l'étage extrême (30), de chaque partie d'enroulement (R') et les extrémités internes des étages (36, 37, 38) correspondants d'au moins une partie d'enroulement (–T') voisine dans le diagramme de phase, une ligne de jonction (47, 48, 49) présentant un interrupteur (50, 51, 52) est chaque fois prévue.

2. Transformateur suivant la revendication 1, caractérisé en ce qu'un réseau d'interrupteurs de sortie (21) est prévu et chaque phase pour la prise sélective de la tension d'une des bornes de connexion (62, 61) des parties d'enroulement secondaire (R', –T') voisines dans le diagramme de phase (Fig. 3) présente deux interrupteurs (22, 23) dont la première connexion est reliée à une des bornes de connexion et dont les autres connexions sont reliées l'une à l'autre ainsi qu'à la connexion de sortie du réseau d'interrupteurs de sortie.

3. Transformateur suivant la revendication 2, caractérisé en ce que, pour décaler de manière continue l'angle de phase des tensions apparaissant sur les bornes de connexion (62, 61) des parties d'enroulement secondaire (R', –T') voisines dans le diagramme de phase (Fig. 3), le réseau d'interrupteurs de sortie (21) présente, entre ces bornes de connexion, chaque fois un déphaseur pouvant être commandé (Fig. 6).

4. Transformateur suivant la revendication 3, caractérisé en ce que le déphaseur pouvant être commandé comporte au moins deux impédances réactives (70, 71) connectées en série entre lesquelles une prise (73) est connectée et un interrupteur de courant (72) commandé électroniquement connecté en série avec au moins une des impédances réactives (71).

Fig. 1

Fig. 2

Fig. 3

Fig. 4

Fig. 5a

Fig. 6

Fig. 5b

Fig. 5c

Fig. 7

Fig. 5d